# EUROPÄISCHE PATENTSCHRIFT

(11) **EP 1 054 833 B1**
(45) Veröffentlichungstag und Bekanntmachung des Hinweises auf die Patenterteilung: **23.10.2002**
(21) Anmeldenummer: 98964499.2
(22) Anmeldetag: 11.12.1998
(51) Int. Cl.: B66C 23/78, B66C 23/80, B60G 17/005

(54) **FAHRBARE ARBEITSMASCHINE MIT STÜTZBEINEN UND ACHSARRETIERUNG**
MOBILE WORKING MACHINE WITH SUPPORT LEGS AND AXLE BLOCKING SYSTEM
ENGIN MOBILE COMPORTANT DES STABILISATEURS ET UN SYSTEME DE BLOCAGE D'ESSIEU

(30) Priorität: 12.02.1998 DE 19805359
(43) Veröffentlichungstag der Anmeldung: 29.11.2000
(73) Patentinhaber: PUTZMEISTER Aktiengesellschaft, 72631 Aichtal (DE)
(72) Erfinder: EBINGER, Willi, D-71144 Steinenbronn (DE)
(74) Vertreter: Wolf, Eckhard, Dr.-Ing.
(86) Internationale Anmeldenummer: EP9808095
(87) Internationale Veröffentlichungsnummer: WO99041184

(56) Entgegenhaltungen:
- DE-A- 3 122 725
- GB-A- 291 837
- GB-A- 780 461
- US-A- 3 950 007

## Beschreibung

Die Erfindung betrifft eine fahrbare Arbeitsmaschine mit einem die Arbeitsmaschine tragenden Fahrgestell, das mindestens vier paarweise zu einer Radachse gehörende, unter Zwischenschaltung von durch Einwirkung einer Achslast vorspannbaren Radfedern an einem Rahmen aufgehängte Räder aufweist, mit zwei seitlich am Rahmen einander gegenüberliegenden, einer der Radachsen, vorzugsweise der Hinterachse zugeordneten Stützbeinen, die mit einem nach unten ausfahrbaren Fußteil unter Anheben des Fahrgestells bodenseitig abstützbar sind und mit mindestens einem den Federweg einer der Radfedern wahlweise freigebenden oder sperrenden Sperrmechanismus.

Fahrbare Arbeitsmaschinen, wie fahrbare Betonpumpen, müssen an der Arbeits- oder Baustelle stabil auf dem Untergrund aufgestellt werden. Hierzu dienen die im Bereich der Vorder- und/oder Hinterachsen angeordneten Stützbeine. Üblicherweise wird vor dem Abstützvorgang die Hinterachse so am Rahmen des Fahrgestells arretiert, daß sie beim anschließenden Ausfahren der Fußteile nicht oder nur wenig ausfedert und die Räder vom Boden abgehoben werden. Hierzu dient je ein Sperrmechanismus, der den Federweg einer der Radfedern wahlweise sperrt oder freigibt. Die Achsarretierung ist bei fahrbaren Betonpumpen notwendig, um die Standsicherheit bei ausgeschwenktem Verteilermast zu erhöhen. Die angehobene Hinterachse dient dabei insgesamt als Ballast und trägt zur Verbesserung der Standsicherheit bei. Außerdem ergibt sich bei Betonpumpen mit rückwärtigem Materialaufgabebehälter eine Verringerung der Einfüllhöhe, was sich als Vorteil bei der Betonbeschickung auswirkt.

Vor allem bei Betonpumpen ist es bekannt, zur Achsarretierung Ketten zu verwenden, die vor dem Abstützen an einem rahmenfesten Haken eingehängt werden. Es ist auch schon vorgeschlagen worden, den Abstützvorgang mit Hilfe eines manuell betätigbaren Hydraulikzylinders durchzuführen. Zur Vermeidung einer Unfall- und Beschädigungsgefahr muß nach Beendigung des Arbeitsvorgangs die Achsarretierung wieder gelöst werden.

Ausgehend hiervon liegt der Erfindung die Aufgabe zugrunde, die bekannte fahrbare Arbeitsmaschine der eingangs angegebenen Art dahingehend zu verbessern, daß mit geringem baulichen Aufwand eine zuverlässig handhabbare Achsarretierung möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß die Handhabung der Achsarretierung erleichtert wird, wenn beim Abstützvorgang eine automatische Achsarretierung erfolgt. Um dies zu erreichen, wird gemäß der Erfindung vorgeschlagen, daß der Sperrmechanismus beim Ausfahren des Fußteils selbsttätig in Sperrichtung und beim Einfahren des Fußteils selbsttätig in Freigaberichtung betätigbar ist. Der Sperrmechanismus wird dabei zweckmäßig unmittelbar oder mittelbar über des Fußteils oder dessen Betätigungsmechanismus ausgelöst oder angesteuert.

Eine bevorzugte Ausgestaltung der Erfindung sieht vor, daß der Sperrmechanismus ein unmittelbar oder mittelbar unter der Einwirkung des Fußteils zwischen einer Freigabe- und einer Sperrstellung relativ zu einer rahmenfesten Stelle verschieb- oder verschwenkbares und zumindest in der Sperrstellung rahmenfest arretierbares Sperrorgan aufweist. Weiter weist der Sperrmechanismus zweckmäßig ein zumindest partiell biegsames Zugglied auf, das an seinem einen Ende am Sperrorgan und an seinem anderen Ende entweder am Rahmen oder an einer radaufhängungsseitigen Stelle der Radfeder verankert ist, wobei im ersteren Falle zusätzlich eine radaufhängungsseitig federfeste Umlenkführung und im letzteren Falle eine rahmenfeste Umlenkführung für das Zugglied vorgesehen ist. Das Zugglied begrenzt in der Sperrstellung des Sperrorgans den Federweg der vorgespannten Radfeder, während es in der Freigabestellung des Sperrorgans ein den Federweg der Radfeder freigebendes Spiel aufweist.

Um die bei der Achsarretierung am Zugglied angreifenden Kräfte besser aufnehmen zu können, ist es vorteilhaft, wenn das Zugglied über mindestens eine weitere rahmenfeste Umlenkführung geführt ist. Um eine kontrollierte Positionierung des zugglieds in der Freigabestellung zu gewährleisten, wird gemäß einer weiteren vorteilhaften Ausgestaltung der Erfindung vorgeschlagen, daß ein biegsamer Abschnitt des Zugglieds von einer spielausgleichenden Zugfeder überbrückt ist. Das Zugglied kann dabei zumindest partiell als biegsames Zugseil oder als Kette ausgebildet sein.

Eine weitere bevorzugte Ausgestaltung der Erfindung sieht vor, daß das Sperrorgan als am Rahmen oder an einem rahmenfesten Teil des Stützbeins angelenkter, mit dem Zugglied verbundener, über ein am ausfahrbaren Fußteil angeordnetes Steuerorgan zwischen der Freigabestellung und der Sperrstellung verschwenkbarer Schwenkriegel ausgebildet ist. Der Schwenkriegel ist dabei zweckmäßig in Richtung Sperrstellung entgegen der Kraft der am Zugglied angreifenden Zugfeder verschwenkbar. Das Steuerorgan weist vorteilhafterweise eine gegen einen am Schwenkriegel exzentrisch zu dessen Schwenkachse angeordneten Nokken verschiebbare Steuerkurve und eine den Schwenkriegel in seiner sperrstellung arretierende Sperrfläche auf. Die Sperrfläche schließt zweckmäßig an die Steuerkurve an, so daß der Nocken in der Sperrstellung des Schwenkriegels auf die Sperrfläche aufläuft, wobei die Sperrfläche parallel zur Ausfahrrichtung des Stützfußes ausgerichtet ist. Es ist vorteilhaft, wenn der Schwenkriegel zwischen der Freigabestellung und der Sperrstellung um 90° um seine Achse verschwenkt wird und dabei das Zugglied mitnimmt. Das erfindungsgemäße Steuerorgan und der Schwenkriegel sorgen dafür, daß zur Absperrung und zur Freigabe der Radachse nur ein relativ kurzer Teil der Verschiebestrecke des Fußteils erforderlich ist, so daß der überwiegende Teil der Abstützbewegung bei arretierter Radachse erfolgt. Je steiler die Steuerkurve in Ausfahrrichtung des Fußteils ist, um so kürzer ist der für den Arretierungsvorgang erforderliche Weganteil des Fußteils. Um die Reibung beim Umsteuervorgang zu reduzieren, ist der Nokken zweckmäßig als Rollnocken ausgebildet.

Wenn die Radfeder als Blattfeder ausgebildet ist, an der die Radaufhängung mittels Federbriden befestigt ist, ist es von Vorteil, die federfeste Umlenkführung oder die federfeste Verankerungsstelle des Zugglieds an einer bridenfesten Platte anzuordnen.

Wenn dagegen die Radfeder als Luftfeder mit veränderlichem Luftdruck ausgebildet ist, ist es von Vorteil, wenn der Luftdruck in der Luftfeder beim Ausfahren des Fußteils selbsttätig vorzugsweise auf Atmosphärendruck reduziert und beim Einfahren des Fußteils mittels einer Druckluftanlage erhöht wird. Zu diesem Zweck ist vorteilhafterweise ein Umsteuerventil vorgesehen, das unmittelbar oder mittelbar über das Fußteil oder den Sperrmechanismus ansteuerbar und dabei die Luftfeder wahlweise mit Druckluft oder mit Atmosphärendruck beaufschlagt.

Im folgenden wird die Erfindung anhand der in der Zeichnung in schematischer Weise dargestellten Ausführungsbeispiele näher erläutert. Es zeigen
- Fig. 1a und b: eine Seitenansicht einer Autobetonpumpe in Fahrstellung und in angehobener Pumpstellung;
- Fig. 2a bis c: eine Seitenansicht, eine Draufsicht und eine Stirnseitenansicht eines Sperrmechanismus für die Achsarretierung;
- Fig. 3a, b und c: eine Seitenansicht, eine Draufsicht und eine Stirnseitenansicht eines gegenüber Fig. 2a bis c abgewandelten Sperrmechanismus;
- Fig. 4: einen vergrößerten Ausschnitt aus Fig. 2c und Fig. 3c;
- Fig. 5: einen Schnitt entlang der Schnittlinie 5-5 der Fig. 4.

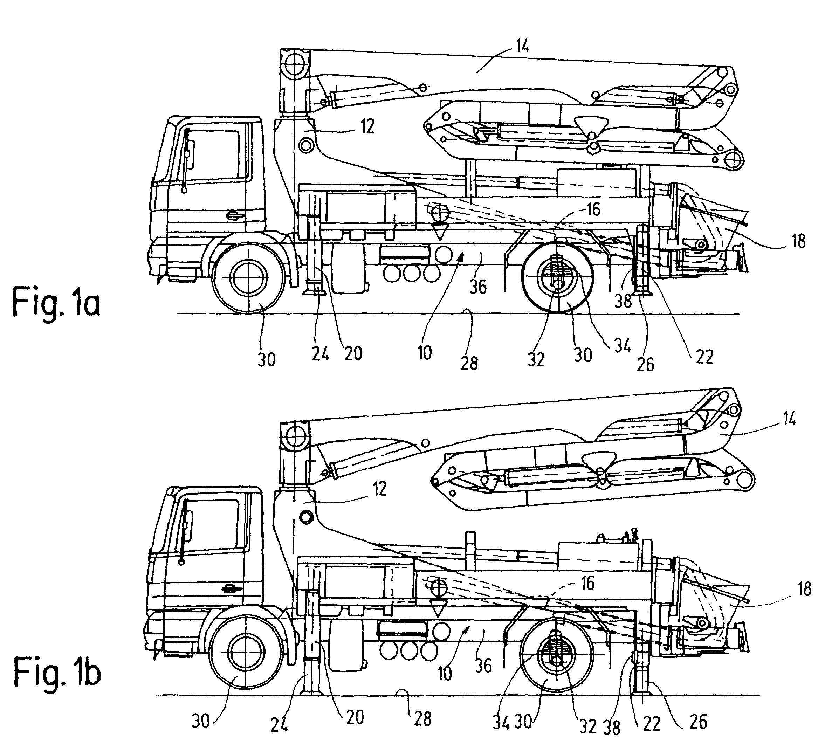

Die in Fig. 1a in Fahrstellung und in Fig. 1b in der angehobenen Pumpstellung dargestellte fahrbare Betonpumpe besteht im wesentlichen aus einem zweiachsigen Fahrgestell 10, einem an einem vorderachsnahen Mastbock 12 um eine vertikale Achse drehbar gelagerten Betonverteilermast 14, einer Dickstoffpumpe 16 mit Materialaufgabebehälter 18 und einer aus zwei vorderen und zwei rückwärtigen Stützbeinen 20,22 bestehenden Stützkonstruktion. Die Stützbeine 20,22 sind mit je einem nach unten ausfahrbaren Fußteil 24,26 unter Anheben des Fahrgestells 10 auf dem Boden 28 abstützbar. Wie aus Fig. 1a und b zu ersehen ist, sind die Räder 30 der Hinterachse 32 unter Zwischenschaltung von durch Einwirkung der Achslast vorspannbaren Radfedern 34 am Rahmen 36 des Fahrgestells 10 aufgehängt. Die Radfedern 34 sind bei dem gezeigten Ausführungsbeispiel als geschichtete Blattfedern ausgebildet. Jedem Rad 30 der Hinterachse 32 ist außerdem ein Sperrmechanismus 38 zugeordnet, mit welchem der Federweg der jeweiligen Radfeder 34 vor dem Anheben in die Pumpstellung nach Fig. 1b gesperrt und dadurch die Hinterachse 32 gegen den Rahmen 36 arretiert werden kann.

Wie nachstehend näher ausgeführt wird, ist der Sperrmechanismus an die Betätigung des Fußteils 26 so gekoppelt, daß er beim Ausfahren des Fußteils selbsttätig in Sperrichtung und beim Einfahren des Fußteils selbsttätig in Freigaberichtung betätigt wird.

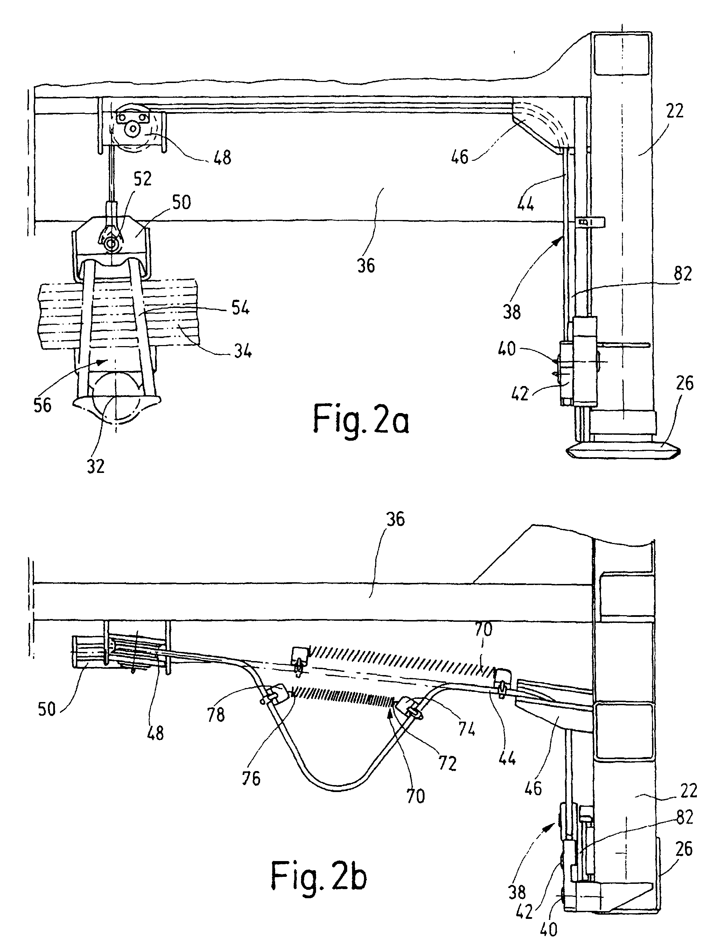

Der Sperrmechanismus 38 weist zu diesem Zweck ein unter der Einwirkung des Fußteils 26 zwischen einer Freigabeund einer Sperrstellung relativ zu einer rahmenfesten Drehachse 40 verschwenkbares und in der Sperrstellung rahmenfest arretierbares, als Schwenkriegel ausgebildetes Sperrorgan 42 sowie ein an seinem einen Ende am Sperrorgan 42 verankerters biegsames Zugglied 44 auf, das in der Sperrstellung des Sperrorgans 42 den Federweg der vorgespannten Radfeder 34 begrenzt und in der Freigabestellung des Sperrorgans 42 ein den Federweg der Radfeder freigebendes Spiel aufweist. Bei dem in Fig. 2a bis c gezeigten Ausführungsbeispiel ist das Zugglied 44 als biegsames Zugseil ausgebildet, das vom Sperrorgan 42 aus über zwei rahmenfeste Umlenkführungen 46,48 zu einer Bridenplatte 50 geführt und dort an einer Verankerungsstelle 52 verankert ist. Die Bridenplatte 50 ist starr mit den Federbriden 54 verbunden, mit denen die Blattfeder auf der Radachse 32 bzw. auf der Radaufhängung 56 gehalten ist. Die Blattfedern sind ihrerseits an ihren Enden über nicht dargestellte Federaugen am Rahmen aufgehängt.

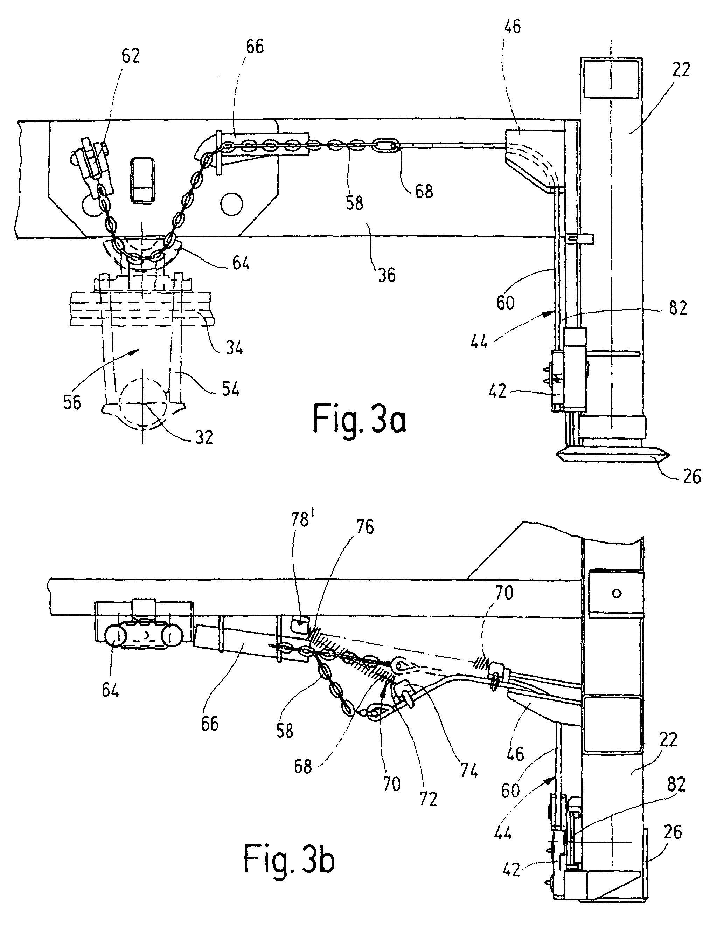

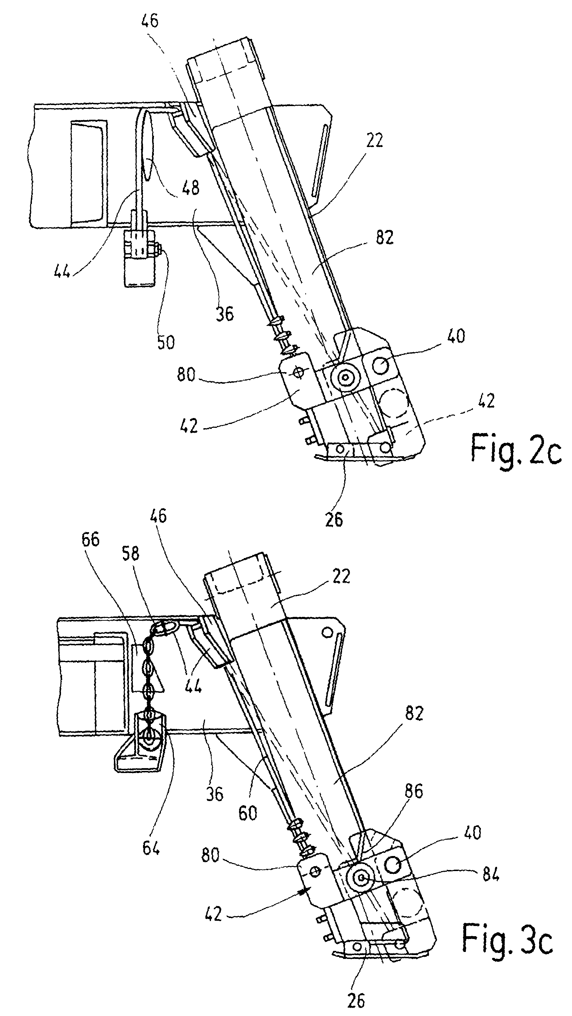

Das in Fig. 3a bis c gezeigte Ausführungsbeispiel unterscheidet sich von dem Ausführungsbeispiel nach Fig. 2a bis c dadurch, daß das Zugglied 44 aus einem Kettenabschnitt 58 und einem Seilabschnitt 60 zusammengesetzt ist, wobei der Kettenabschnitt 58 mit seinem freien Ende an einer rahmenfesten Verankerungsstelle 62 verankert und durch eine gebogene, an der Bridenplatte 50 angeordnete Umlenkführung 64 hindurch zu einer rahmenfesten Umlenkführung 66 geführt ist. Im Bereich zwischen den rahmenfesten Umlenkführungen 66 und 46 befindet sich eine Verbindungsstelle 68, an der der Kettenabschnitt 58 mit dem Seilabschnitt 60 verbunden ist.

Im Zwischenbereich zwischen den beiden Umlenkführungen 46,48 bzw. 46,66 ist das Zugglied 44 von einer Zugfeder 70 überbrückt, die mit ihrem einen Ende 72 in beiden Fällen über einen Federhalter 74 mit dem Zugglied 44 verbunden ist, während sie mit ihrem anderen Ende 76 im Falle der Fig. 2b über einen weiteren Federhalter 78 am Zugglied 44 und im Falle der Fig. 3b über einen Federhalter 78' am Rahmen 36 befestigt ist. Die Zugfeder 70 sorgt dafür, daß in der Freigabestellung des Sperrorgans 42 das Zugglied 44 sowohl zum Sperrorgan 42 als auch zur Radfeder 34 hin unter einer gewissen Vorspannung gehalten wird.

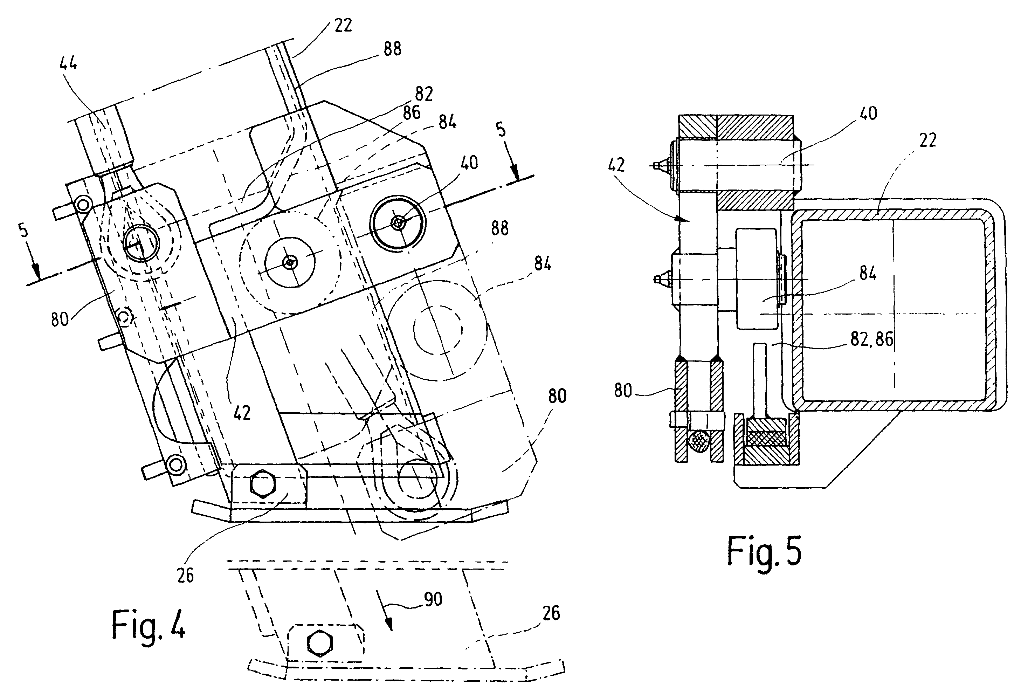

Wie insbesondere aus Fig. 4 und 5 zu ersehen ist, ist das Sperrorgan 42 als an einem rahmenfesten Teil des Stützbeins 22 im Bereich der Drehachse 40 angelenkter, an seinem der Drehachse gegenüberliegenden freien Ende 80 mit dem Zugglied verbundener Schwenkriegel ausgebildet, der über ein am ausfahrbaren Fußteil 26 starr angeordnetes Steuerorgan 82 zwischen der in durchgezogenen Linien eingezeichneten Freigabestellung und der in gestrichelten Linien eingezeichneten Sperrstellung entgegen der Kraft der am Zugglied 44 angreifenden Zugfeder 70 verschwenkbar ist. Das Steuerorgan 82 weist zu diesem Zweck eine gegen einen am Sperrorgan 42 exzentrisch zu dessen Drehachse angeordneten Rollnocken 84 verschiebbare Steuerkurve 86 und eine an die Steuerkurve 86 anschließende, das Steuerorgan 82 in seiner Sperrstellung arretierende Sperrfläche 88 auf. Beim Verschwenken in die Sperrstellung läuft der Rollnokken 84 des Sperrorgans 42 auf die Sperrfläche 88 des Steuerorgans 82 auf. Die Sperrfläche 88 ist dabei parallel zu der durch den Pfeil 90 in Fig. 4 angedeuteten Ausfahrrichtung des Fußteils ausgerichtet, so daß es für die Sperrwirkung nicht darauf ankommt, wie weit das Fußteil 26 aus dem feststehenden Teil des Stützbeins 22 ausgefahren ist. Zwischen der Freigabestellung und der Sperrstellung wird das Sperrorgan 42 um 90° um seine Drehachse 40 verschwenkt, wobei zum Verschwenken nur eine relativ kurze Verschiebestrecke des Fußteils 26 in Richtung des Pfeils 90 notwendig ist.

Beim Einfahren des Fußteils 26 gelangt das Sperrorgan 42 in der letzten Phase des Einfahrvorgangs von der Sperrfläche 88 zur Steuerkurve 86 und wird dort unter der Einwirkung der Zugfeder 70 in seine Freigabestellung zurückgeschwenkt.

Zusammenfassend ist folgendes festzuhalten: Die Erfindung bezieht sich auf eine fahrbare Arbeitsmaschine, insbesondere eine Autobetonpumpe mit Verteilermast und hinterradseitig angeordnetem Materialaufgabebehälter. Die fahrbare Arbeitsmaschine weist ein Fahrgestell 10 auf, das mindestens vier paarweise zu einer Radachse 32 gehörende, unter Zwischenschaltung von durch Einwirkung einer Achslast vorspannbaren Radfedern 34 an einem Rahmen 36 aufgehängte Räder 30 aufweist. Weiter sind seitlich am Rahmen paarweise einander gegenüberliegende, einer der Radachsen 32, vorzugsweise der Hinterachse zugeordnete, mit einem nach unten ausfahrbaren Fußteil 26 unter Anheben des Fahrgestells 10 bodenseitig abstützbare Stützbeine 22 sowie mindestens ein den Federweg einer der Radfedern 34 wahlweise freigebender oder sperrender Sperrmechanismus vorgesehen. Um eine zuverlässige und sichere Handhabung bei der Achsarretierung zu gewährleisten, ist der Sperrmechanismus 38 beim Ausfahren des Fußteils 26 selbsttätig in Sperrichtung und beim Einfahren des Fußteils 26 selbsttätig in Freigaberichtung betätigbar.

## Patentansprüche

1. Fahrbare Arbeitsmaschine mit einem die Arbeitsmaschine (14,16,18) tragenden Fahrgestell (10), das mindestens vier paarweise zu einer Radachse (32) gehörende, unter Zwischenschaltung von durch Einwirkung einer Achslast vorspannbaren Radfedern (34) an einem Rahmen (36) aufgehängte Räder (30) aufweist, mit zwei seitlich am Rahmen (36) einander gegenüberliegenden, einer der Radachse, vorzugsweise der Hinterachse (32) zugeordneten Stützbeinen (20,22), die mit einem vorzugsweise mit hydraulischen Mitteln nach unten ausfahrbarem Fußteil (24,26) unter Anheben des Fahrgestells (10) bodenseitig abstützbar sind, und mit mindestens einem den Federweg einer der Radfedern (34) wahlweise freigebenden oder sperrenden Sperrmechanismus (38), **dadurch gekennzeichnet, daß** der Sperrmechanismus (38) beim Ausfahren des Fußteils (26) selbsttätig in Sperrrichtung und beim Einfahren des Fußteils (26) selbsttätig in Freigaberichtung betätigbar ist.

2. Fahrbare Arbeitsmaschine nach Anspruch 1, **dadurch gekennzeichnet, daß** der Sperrmechanismus (38) unmittelbar oder mittelbar über das Fußteil (26) oder dessen Betätigungsmechanismus auslösbar oder ansteuerbar ist.

3. Fahrbare Arbeitsmaschine nach Anspruch 1 oder 2, **dadurch gekennzeichnet, daß** der Sperrmechanismus (38) ein unmittelbar oder mittelbar unter der Einwirkung des Fußteils (26) zwischen einer Freigabe- und einer Sperrstellung relativ zu einer rahmenfesten Stelle (Drehachse 40) verschieb- oder verschwenkbares und zumindest in der Sperrstellung rahmenfest arretierbares Sperrorgan (42) aufweist.

4. Fahrbare Arbeitsmaschine nach Anspruch 3, **dadurch gekennzeichnet, daß** der Sperrmechanismus (38) ein an seinem einen Ende am Sperrorgan (42) verankertes, zumindest partiell biegsames Zugglied aufweist, das in der Sperrstellung des Sperrorgans den Federweg der vorgespannten Radfeder (34) begrenzt und in der Freigabestellung des Sperrorgans (42) ein den Federweg der Radfeder freigebendes Spiel aufweist.

5. Fahrbare Arbeitsmaschine nach Anspruch 4, **dadurch gekennzeichnet, daß** das Zugglied (44) vom Sperrorgan (42) aus durch eine radaufhängungsseitig federfeste umlenkführung (64) hindurch zu einer rahmenfesten Verankerungsstelle (62) geführt ist.

6. Fahrbare Arbeitsmaschine nach Anspruch 4, **dadurch gekennzeichnet, daß** das Zugglied (44) vom Sperrorgan aus über eine rahmenfeste Umlenkführung (48) hindurch zu einer radaufhängungsseitigen Verankerungsstelle (52) der Radfeder (34) geführt ist.

7. Fahrbare Arbeitsmaschine nach Anspruch 5 oder 6, **dadurch gekennzeichnet, daß** das Zugglied (44) über mindestens eine weitere rahmenfeste Umlenkführung (46, 66) geführt ist.

8. Fahrbare Arbeitsmaschine nach einem der Ansprüche 4 bis 7, **dadurch gekennzeichnet, daß** die Radfeder (34) als Blattfeder ausgebildet ist, an der die Radaufhängung (56) oder die Radachse (32) mittels Federbriden (54) befestigt ist und daß die federfeste Umlenkführung (64) oder die federfeste Verankerungsstelle (52) des Zugglieds (44) an einer bridenfesten Platte (50) angeordnet ist.

9. Fahrbare Arbeitsmaschine nach einem der Ansprüche 4 bis 8, **dadurch gekennzeichnet, daß** ein biegsamer Abschnitt des Zugglieds (44) von einer spielausgleichenden Zugfeder (70) überbrückt ist.

10. Fahrbare Arbeitsmaschine nach Anspruch 9, **dadurch gekennzeichnet, daß** die Zugfeder (70) an ihrem sperrorganseitigen Ende (72) am Zugglied (44) und an ihrem radseitigen Ende (76) am Rahmen (36) befestigt ist.

11. Fahrbare Arbeitsmaschine nach einem der Ansprüche 4 bis 10, **dadurch gekennzeichnet, daß** das Zugglied (44) zumindest partiell als biegsames Zugseil (60) oder als Kette (58) ausgebildet ist.

12. Fahrbare Arbeitsmaschine nach einem der Ansprüche 3 bis 11, **dadurch gekennzeichnet, daß** das Sperrorgan (42) als am Rahmen (36) oder an einem rahmenfesten Teil des Stützbeins (22) angelenkter, mit dem Zugglied (44) verbundener, über ein am ausfahrbaren Fußteil (26) angeordnetes Steuerorgan (82) zwischen der Freigabestellung und der Sperrstellung verschwenkbarer Schwenkriegel ausgebildet ist.

13. Fahrbare Arbeitsmaschine nach Anspruch 12, **dadurch gekennzeichnet, daß** der Schwenkriegel (42) in Richtung Sperrstellung entgegen der Kraft der am Zugglied (44) angreifenden Zugfeder (70) verschwenkbar ist.

14. Fahrbare Arbeitsmaschine nach Anspruch 12 oder 13, **dadurch gekennzeichnet, daß** das Steuerorgan (82) eine gegen einen am Schwenkriegel (42) exzentrisch zu dessen Drehachse (40) angeordneten Nocken (84) verschiebbare Steuerkurve (86) und eine den Schwenkriegel in seiner Sperrstellung arretierende Sperrfläche (88) aufweist.

15. Fahrbare Arbeitsmaschine nach Anspruch 14, **dadurch gekennzeichnet, daß** die Sperrfläche (88) an die Steuerkurve (86) anschließt und daß der Nocken in der Sperrstellung des Schwenkriegels (42) auf die Sperrfläche (88) aufläuft.

16. Fahrbare Arbeitsmaschine nach Anspruch 14 oder 15, **dadurch gekennzeichnet, daß** die Sperrfläche (88) parallel zur Ausfahrrichtung (90) des Fußteils (26) ausgerichtet ist.

17. Fahrbare Arbeitsmaschine nach einem der Ansprüche 12 bis 16, **dadurch gekennzeichnet, daß** der Schwenkriegel (42) zwischen der Freigabestellung und der Sperrstellung um 90° um seine Drehachse (40) verschwenkbar ist.

18. Fahrbare Arbeitsmaschine nach einem der Ansprüche 14 bis 17, **dadurch gekennzeichnet, daß** der Nocken (84) als Rollnocken ausgebildet ist.

19. Fahrbare Arbeitsmaschine nach einem der Ansprüche 1 bis 7 oder 9 bis 18, **dadurch gekennzeichnet, daß** die Radfeder als Luftfeder ausgebildet ist und daß der Luftdruck in der Luftfeder beim Ausfahren des Fußteils selbsttätig vorzugsweise auf Atmosphärendruck reduziert und beim Einfahren des Fußteils selbsttätig mittels einer Druckluftanlage erhöht wird.

20. Fahrbare Arbeitsmaschine nach Anspruch 19, **gekennzeichnet durch** ein unmittelbar oder mittelbar über das Fußteil oder über den Sperrmechanismus ansteuerbares, die Luftfeder wahlweise mit Druckluft oder mit Atmosphärendruck beaufschlagendes Umsteuerventil.

## Claims

1. Mobile working machine with a work machine (14, 16, 18) supporting chassis (10), with at least four wheels (30) pair-wise associated with wheel axles (32) and connected to a frame (36) via wheel springs (34) pre-tensionable by the effect of the load exerted on the axle, with two support legs (20, 22) provided laterally one opposite the other on the sides of the frame and associated with one wheel axle (32), preferably the back axle, which have a footpart (24, 26) that can be extended downwardly and supported on the ground thereby raising the chassis (10) off the ground, and at least one blocking mechanism (38) for selectively releasing or blocking the spring path of one of the wheel springs (34), thereby characterized, that the blocking mechanism (38) automatically moves in the blocking direction when the footpart (26) is extended and automatically moves in the release direction when the footpart (26) is retracted.

2. Mobile working machine according to Claim 1, thereby characterized, that the blocking device (38) is tripped or controlled directly or indirectly via the foot part (26) or the operating mechanism thereof.

3. Mobile working machine according to Claim 1 or 2, thereby characterized, that the blocking mechanism (38) comprises a blocking device (42) which is slideable or pivotable between a release position and a blocking position relative to a frame fixed position (rotation axis 40) and which is arrestable in a frame fixed position at least in the blocking position directly or indirectly under the influence of the foot part (26).

4. Mobile working machine according to Claim 3, thereby characterized, that the blocking mechanism (38) comprises an at least partially flexible tension member anchored at one end to the blocking device (42) which in the blocking position of the blocking device limits the spring path of the pretensioned wheel spring (34) and in the release position of the blocking device (42) provides free play in the spring path of the wheel spring.

5. Mobile working machine according to Claim 4, thereby characterized, that the tension member (44) eminating from the blocking device (42) is guided through a wheel-mount-side spring-fixed redirection guide (64) to a frame-fixed anchoring position (62).

6. Mobile working machine according to Claim 4, thereby characterized, that the tension member (44) going from the blocking device is guided via a frame-fixed redirection guide (48) through to a wheel-mount-side anchoring position (52) of the wheel spring (34) [sic].

7. Mobile working machine according to Claim 5 or 6, thereby characterized, that the pull spring (44) is guided through at least one further frame-fixed redirection guide (46, 66).

8. Mobile working machine according to one of Claims 4-7, thereby characterized, that the wheel spring (34) is formed as leaf spring, on which the wheel mounts (56) or the wheel axles (32) are secured via spring brackets (54), and that the spring-fixed redirection guide (64) or the spring fixed anchoring position of the tension member (44) is provided on a plate (50) of a spring U-clamp.

9. Mobile working machine according to one of Claims 4-8, thereby characterized, that a flexible segment of the tension member (44) is bridged over by a tension-equalizing draw spring (70).

10. Mobile working machine according to Claim 9, thereby characterized, that the draw spring (70) at it's blocking device (72) end is secured on the tension member (44), and on it's wheel side end (76) is secured to the frame (36).

11. Mobile working machine according to one of Claims 4-10, thereby characterized, that the tension member (44) is designed at least partially as a flexible rope (60) or as a chain (58).

12. Mobile working machine according to one of Claims 3-11, thereby characterized, that the blocking device (42) is designed as a pivot lock linked on the frame (36) or on a frame fixed part of the support leg (22), connected with the tension member (44), pivotable between a release position and a blocking position via a control device (82) provided on the extendable foot part (26).

13. Mobile working machine according to Claim 12, thereby characterized, that the pivot lock (42) is pivotable in the direction of the lock position against the force of a pull spring (70) engaging on the tension member (44).

14. Mobile working machine according to Claim 12 or 13, thereby characterized, that the control device (82) includes a control curve (86) slideable against a cam (84) provided on the pivot lock (42) eccentrically to the pivot axis (40) thereof and a blocking surface (88) which blocks the pivot lock when in the locked position.

15. Mobile working machine according to Claim 14, thereby characterized, that the blocking surface (88) is continuous with the control curve (86) and that the cam runs upon the blocking surface (88) in the blocking position of the pivot lock (42).

16. Mobile working machine according to Claim 14 or 15, thereby characterized, that the blocking surface (88) runs parallel to the extension direction (90) of the foot part (26).

17. Mobile working machine according to one of Claims 12-16, thereby characterized, that the pivot lock (42) is pivotable between the release position and the blocking position 90° about a rotation axis (40).

18. Mobile working machine according to one of Claims 14-17, thereby characterized, that the cam (84) is constructed as a roller cam.

19. Mobile working machine according to one of Claims 1-7 or 9-18, thereby characterized, that the wheel spring is constructed as a pneumatic spring and that the air pressure in the pneumatic spring during extension of the foot part automatically is reduced preferably to atmospheric pressure and during retraction of the foot part automatically is increased via an air pressure unit.

20. Mobile working machine according to Claim 19, **characterized by** a control valve which is directly or indirectly controllable via the foot part or via the blocking mechanism, which provides the air spring selectively with compressed air or with atmospheric pressure air.

## Revendications

1. Engin mobile comprenant un châssis de roulement (10) portant ledit engin (14, 16, 18) et muni d'au moins quatre roues (30) affectées par paires à un essieu (32), et suspendues à un cadre (36) avec interposition de ressorts (34) pouvant être précontraints sous l'action d'une charge imposée à l'essieu ; deux jambes de force (20, 22) qui sont mutuellement opposées sur les côtés du cadre (36), sont affectées à l'un des essieux, de préférence à l'essieu arrière (32), et peuvent prendre appui sur le sol, par une pièce d'embase (24, 26) déployable vers le bas, de préférence grâce à des moyens hydrauliques, avec soulèvement du châssis de roulement (10) ; et au moins un mécanisme de blocage (38) autorisant ou bloquant sélectivement la course élastique de l'un des ressorts (34) des roues, **caractérisé par le fait que** ledit mécanisme de blocage (38) peut être manoeuvré automatiquement vers une position de blocage, lors du déploiement de la pièce d'embase (26), et vers une position de libération lors de la rétraction de ladite pièce d'embase (26).

2. Engin mobile selon la revendication 1, **caractérisé par le fait que** le mécanisme de blocage (38) peut être directement ou indirectement déclenché ou activé par l'intermédiaire de la pièce d'embase (26), ou du mécanisme d'actionnement de cette dernière.

3. Engin mobile selon la revendication 1 ou 2, **caractérisé par le fait que** le mécanisme de blocage (38) comporte un organe de blocage (42) qui peut coulisser ou pivoter directement ou indirectement sous l'action de la pièce d'embase (26), entre une position de libération et une position de blocage, vis-à-vis d'une zone (axe de rotation 40) assujettie au cadre, et qui peut être arrêté fermement sur le cadre, au moins dans la position de blocage.

4. Engin mobile selon la revendication 3, **caractérisé par le fait que** le mécanisme de blocage (38) comporte un organe de traction au moins partiellement doué de flexibilité, qui est ancré sur l'organe de blocage (42) par l'une de ses extrémités, limite, dans la position de blocage dudit organe de blocage, la course élastique du ressort (34) de roue précontraint, et présente, dans la position de libération dudit organe de blocage (42), un jeu autorisant la course élastique dudit ressort de roue.

5. Engin mobile selon la revendication 4, **caractérisé par le fait que** l'organe de traction (44) est guidé à partir de l'organe de blocage (42), jusqu'à une zone d'ancrage (62) solidaire du cadre, en traversant un guide de renvoi (64) assujetti à un ressort du côté d'une suspension de roue.

6. Engin mobile selon la revendication 4, **caractérisé par le fait que** l'organe de traction (44) est guidé à partir de l'organe de blocage, jusqu'à une zone d'ancrage (52) du ressort (34) de roue située du côté de la suspension de roue, en traversant un guide de renvoi (48) assujetti au cadre.

7. Engin mobile selon la revendication 5 ou 6, **caractérisé par le fait que** l'organe de traction (44) est guidé par l'intermédiaire d'au moins un autre guide de renvoi (46, 66) assujetti au cadre.

8. Engin mobile selon l'une des revendications 4 à 7, **caractérisé par le fait que** le ressort (34) de roue est réalisé sous la forme d'une lame de ressort à laquelle la suspension (56) de la roue, ou l'essieu (32), est fixé(e) au moyen de brides (54) ; et **par le fait que** le guide de renvoi (64) assujetti au ressort, ou la zone d'ancrage (52) de l'organe de traction (44) qui est assujettie au ressort, se trouve sur une plaque de bridage (50).

9. Engin mobile selon l'une des revendications 4 à 8, **caractérisé par le fait qu'**un segment flexible de l'organe de traction (44) est coiffé par un ressort de traction (70) compensateur de jeu.

10. Engin mobile selon la revendication 9, **caractérisé par le fait que** le ressort de traction (70) est fixé à l'organe de traction (44) par son extrémité (72) située du côté de l'organe de blocage, et au cadre (36) par son extrémité (76) située du côté de la roue.

11. Engin mobile selon l'une des revendications 4 à 10, **caractérisé par le fait que** l'organe de traction (44) est au moins partiellement réalisé comme un câble de traction (60) doué de flexibilité, ou comme une chaîne (58).

12. Engin mobile selon l'une des revendications 3 à 11, **caractérisé par le fait que** l'organe de blocage (42) est réalisé comme un verrou pivotant qui est articulé sur le cadre (36) ou sur une partie de la jambe de force (22) assujettie audit cadre, est relié à l'organe de traction (44), et peut pivoter entre la position de libération et la position de blocage, par l'intermédiaire d'un organe de commande (82) situé sur la pièce d'embase (26) déployable.

13. Engin mobile selon la revendication 12, **caractérisé par le fait que** le verrou pivotant (42) peut pivoter en direction de la position de blocage, en s'opposant à la force du ressort de traction (70) venant en prise avec l'organe de traction (44).

14. Engin mobile selon la revendication 12 ou 13, **caractérisé par le fait que** l'organe de commande (82) comporte une came de commande (86) pouvant coulisser contre un tenon (84) occupant, sur le verrou pivotant (42), une position excentrée par rapport à l'axe de rotation (40) de ce dernier, et une surface de blocage (88) arrêtant ledit verrou pivotant dans sa position de blocage.

15. Engin mobile selon la revendication 14, **caractérisé par le fait que** la surface de blocage (88) est attenante à la came de commande (86) ; et **par le fait que** le tenon monte sur ladite surface de blocage (88) dans la position de blocage du verrou pivotant (42).

16. Engin mobile selon la revendication 14 ou 15, **caractérisé par le fait que** la surface de blocage (88) est orientée parallèlement à la direction (90) du déploiement de la pièce d'embase (26).

17. Engin mobile selon l'une des revendications 12 à 16, **caractérisé par le fait que** le verrou pivotant (42) peut pivoter de 90°, autour de son axe de rotation (40), entre la position de libération et la position de blocage.

18. Engin mobile selon l'une des revendications 14 à 17, **caractérisé par le fait que** le tenon (84) est réalisé sous la forme d'un tenon à galet.

19. Engin mobile selon l'une des revendications 1 à 7 ou 9 à 18, **caractérisé par le fait que** le ressort de roue est réalisé sous la forme d'un ressort pneumatique ; et **par le fait que** la pression de l'air régnant dans ledit ressort pneumatique est réduite automatiquement lors du déploiement de la pièce d'embase, de préférence jusqu'à la pression atmosphérique, et est accrue automatiquement lors de la rétraction de ladite pièce d'embase, au moyen d'une installation d'air comprimé.

20. Engin mobile selon la revendication 19, **caractérisé par** une vanne d'inversion de commande qui peut être activée directement ou indirectement par l'intermédiaire de la pièce d'embase ou du mécanisme de blocage, et qui sollicite sélectivement le ressort pneumatique par de l'air comprimé, ou par la pression atmosphérique.
